# EUROPEAN PATENT APPLICATION

(11) **EP 2 458 724 A1**
(43) Date of publication of application: **30.05.2012**
(21) Application number: 10801845.8
(22) Date of filing: 25.06.2010
(51) Int. Cl.: H02M 5/00, H02M 5/42, H02J 3/00

(54) **MOVABLE SHORE POWER VARIABLE FREQUENCY POWER SUPPLY DEVICE**

(30) Priority: 22.07.2009 CN 200910057627
(71) Applicant: Bao, Qifan, Shanghai 200080 (CN)
(72) Inventor: Bao, Qifan, Shanghai 200080 (CN)
(74) Representative: Viering, Jentschura & Partner
(86) International application number: PCT/CN2010/000951
(87) International publication number: WO 2011/009285

(57) **Abstract**

A movable shore power variable frequency power supply device comprises an onshore power supply electric box (4), an onboard power receiving system (3) and a variable frequency power supply device (1). The input terminals of the variable frequency power supply device (1) are connected to the onshore power supply electric box (4) via cables, and the output terminals of the variable frequency power supply device (1) are connected to a cable reel box (2) via cables (101). The variable frequency power supply device (1) performs frequency conversion and voltage transformation of an input power supply and then outputs the converted power to the cable reel box (2). The cable reel box (2) is provided with at least one low-voltage reel with a plurality of cables (102) and a plurality of plugs. The cables (102) are connected to the onboard power receiving system (3) via the corresponding plugs. The power supply device performs frequency conversion of the power supply on land and provides vessels in a harbor with the converted power, thus realizes a double-frequency power supply.

## Description

### FIELD OF THE INVENTION

This invention relates to a power supply device for vessels in a harbor, and more particularly to a movable shore power frequency conversion power supply device performs frequency conversion of the power supply on land and provides vessels in a harbor with the converted power.

### BACKGROUD OF THE INVENTION

Global oil resources are being dried up, and the world constantly raises the requirements for environmental protection, energy saving and low consumption. The state clearly brings forward a target of energy saving and pollution reduction in the "Eleventh Five-Year Plan". Energy saving in harbors has a very important strategic significance. As one of the largest ports for the container throughput in the world, Shanghai port has many harbor districts concentrated in urban areas of the city. With the construction of the international shipping center, a growing number of vessels have docked in Shanghai port. The pollution generated by the vessels docked in the port seriously conflicts with the environmental protection in the urban areas. Meantime, energy saving and reducing operating costs are also an enterprise's own demands.

Large vessels, especially oil tankers and container vessels, in a harbor generally use fuel products (mostly heavy oil, diesel fuel) for generating power to satisfy the electro-demand of the vessels. Heavy oil and diesel fuel in the combustion process produce a large amount of sulfur and nitrogen oxides, which pollute the surrounding environment. Marine generators and diesel engines also generate noise pollutions to the environment. At present, some international advanced ports have provided the vessels in the harbors with power supplies on lands. This manner to supply power to the vessels is called "shore power technology". In recent years, the shore power technology is called with various terms, such as Onshore Power Supply (OPS), Shore-side electricity, Shore-connected electricity supply, Shore power, Ship-to-shore, Cold ironing, and Alternative Maritime Power (AMP). These terms all refer to the technology of supplying vessels in a harbor with shore power in lieu of a marine generator of the vessel. The shore power of the harbor district (dock) is supplied to electrical equipments in the vessels through connection cables and onshore power boxes in the vessels. Because an exhaust emission of power plants is greatly lower than that of diesel engines, providing the vessels in the harbor with the shore power is an effective approach to reduce emission in the port, and even the city. The shore power technology is also an effective measure for energy saving and noise reduction in the harbor.

The conventional shore power technology include direct power supply to 60Hz vessel grid with 60Hz harbor grid (United States), direct power supply to 50Hz vessel grid with 50Hz harbor grid (Europe). However, the shore power technology never involves frequency conversion. Foreign vessel grids have mostly frequencies of 60Hz, and the harbor grids in our country have a frequency of 50Hz. It is necessary to research a shore power conversion technology applied to the electric mode of our country to convert the AC of the harbor grid into a 60Hz AC adapted to foreign vessels for releasing a 50Hz/60Hz double-frequency power supply.

### SUMMARY OF THE INVENTION

For solving the above problem of the prior art, the present invention proposes a shore power variable frequency power supply device which utilizes a high-power frequency conversion technique to realize supplying vessels in a harbor with 60Hz power using a 50Hz shore power. The device eliminates an inconvenience to provide the vessels with the shore power caused by a difference in the frequencies. A variable frequency power supply device in the present invention is movable according to a user's need, so it is easy to use the device.

The present invention provides the following technical solutions.

A movable shore power variable frequency power supply device comprises an onshore power supply electric box, an onboard power receiving system, and further comprises a variable frequency power supply device having input terminals connected to the onshore power supply electric box via cables and output terminals connected to a cable reel box via cables. The variable frequency power supply device performs frequency conversion and voltage transformation of an input power supply and then outputs the converted power to the cable reel box. The cable reel box is provided with at least one low-voltage reel with a plurality of cables and a plurality of plugs. The plurality of cables is connected to the onboard power receiving system via the corresponding plugs.

According to a preferred embodiment, the variable frequency power supply device comprises a high-voltage switch and voltage transformer cabinet, a low-voltage incoming line switch cabinet, a first rectifier cabinet, a second rectifier cabinet, an inversion cabinet, an output voltage transformer cabinet and an output switch cabinet connected in series.

According to a preferred embodiment, the variable frequency power supply device comprises a high-voltage switch and voltage transformer cabinet, a low-voltage incoming line switch cabinet, a first rectifier cabinet, a second rectifier cabinet, a first inversion cabinet, a second inversion cabinet, an output voltage transformer cabinet and an output switch cabinet connected in series.

According to a preferred embodiment, the numbers of the low-voltage reels and the plugs are nine, respectively. The input power of the variable frequency power supply device is 10kV/50HZ.

By utilizing the above solutions, the shore power technique of the invention is an effective approach to reduce emission of exhaust in the port, and even the city. The shore power technology is also an effective measure for energy saving and noise reduction in the harbor. The movable variable frequency power supply device can perform frequency conversion of the power supply on land and provide the vessels in the harbor with the converted power, which eliminates an inconvenience to provide the vessels with the shore power caused by a difference in the frequencies.

### BRIEF DESCRIPTION OF THE DRAWINGS

Fig. 1 is a schematic view showing a construction of a movable shore power frequency conversion power supply device in accordance with the present invention;
   in which: 1-variable frequency power supply device; 2-cable reel box; 3-power receiving system of vessel; 4-onshore power supply box;
Fig. 2A and 2B are one-line diagrams of the variable frequency power supply with a capacity of 2000kVA in accordance with an embodiment of the invention; and
Fig. 3A and 3B are one-line diagrams of the variable frequency power supply with a capacity of 500kVA in accordance with an embodiment of the invention;

### DETAILED DESCRIPTION OF THE PREFERRED EMBODIMENTS

The invention will be described with reference to the accompanying drawings and embodiments hereinafter.

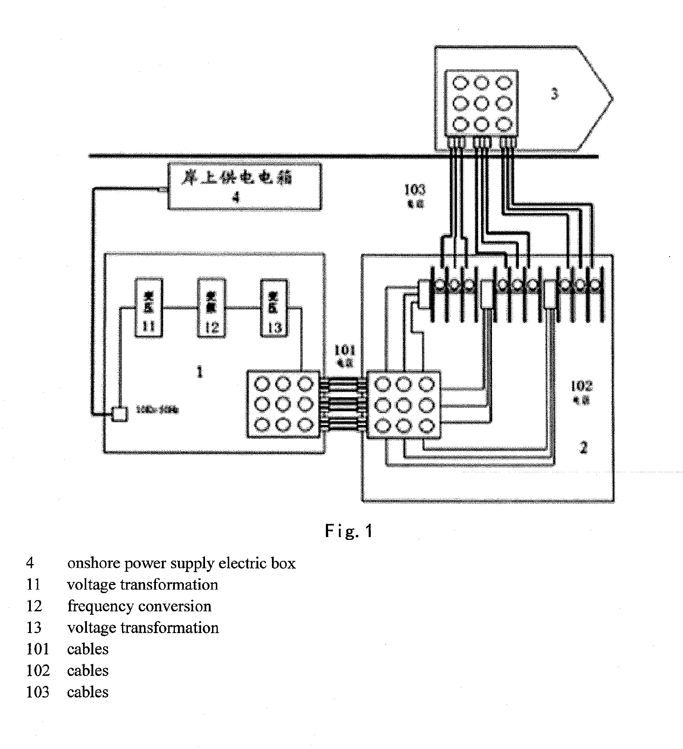

As illustrated in Fig. 1, a movable shore power variable frequency power supply device comprises: an onshore power supply electrical box 4, an onboard power receiving system 3; and a variable frequency power supply device 1. The variable frequency power supply device 1 has input terminals connected to the onshore power supply box 4 via cables, and output terminals connected to a cable reel box 2 via cables. The variable frequency power supply device 1 performs frequency conversion and voltage transformation of an input power supply and then output the converted power to the cable reel box 2. In this embodiment, the input power of the variable frequency power supply device 1 is 10kV/50Hz. The cable reel box 2 is provided with at least one low-voltage reel with a plurality of cables and a plurality of plugs. The plurality of cables is connected to the onboard power receiving system 3 via the corresponding plugs.

In this embodiment, the variable frequency power supply device 1 first performs a voltage transformation of 10kV/720V to reach an operating voltage of a frequency converter in the variable frequency power supply device. After that, the device performs a frequency conversion of 50Hz/60Hz, and then performs a voltage transformation of 660V/460V to output a voltage of 440V.

When the vessel is supplied with a low voltage of 440V, an electrical current is large. In this embodiment, the variable frequency power supply device is connected with the onshore power supply electric box and with the cable reel box via nine cables, respectively. The cable reel box is also connected with the onboard power receiving system 3 via nine cables.

The variable frequency power supply device mainly includes input/output switch cabinet, high-voltage transformer cabinet, frequency converter cabinet, output voltage transformer cabinet, etc. Except the frequency converter, all the elements use passive devices and have extremely high reliability and stability.

### 1) High-voltage transformer cabinet

An electrical high-voltage transformer cabinet made by CEEG (China Electric Equipment Group) is employed. The high-voltage transformer cabinet is disposed within a shielding box for insulating a magnetic field coupling effect between interior and exterior of the transformer. The high-voltage transformer is a three-winding transformers, wherein one winding is primary winding, and the other two windings are secondary windings to output power to the frequency converter. The high-voltage winding is arranged with Delta-connection. One of the secondary windings is arranged with Y-connection with a lead-out center point, and the other secondary winding is arranged with Delta-connection, with an electric angle of 30° therebetween. An advantage of the circuit is to increase a number of pulses of rectification circuit from 6 to 12. The fifth, seventh, seventeenth and nineteenth harmonic waves generated by two rectification bridges are counteracted with each other.

### 2) Input/output switch cabinet

Air breaks are employed as input/output switches for protection from overload, over-current and short circuit. Input EMI filters are used for controlling and guaranteeing quality of electrical energy of power grid for inputting the frequency converters.

### 3) Frequency converter cabinet

The frequency converter cabinet comprises frequency converters and harmonic suppressors. The frequency converters may use NXP series 690V level or 500V level 12-pulse rectification inverters manufactured by Vacon Company, Finland.

A sine wave filter is mainly combined by a filter capacitor, a filter reactance, a non-inductance resistor and a control-protection system. The sine wave filter is connected in parallel with a harmonic source, and is designed based on components and magnitudes of harmonic currents and reactive power demand of the system such that the device provides a low impendence passageway for the harmonic waves. A majority of the harmonic currents flows into the filter device and is prevented from flowing into the grid to minimize aberration of the grid.

### 4) Output voltage transformer cabinet

An epoxy resin casting high quality low short circuit impendence dry-type voltage transformers is employed. An insulation level of the voltage transformer is H level. The voltage transformer is especially designed for variable frequency power supply equipment, and has characters of low short circuit impendence, low loss, low heat value and high efficiency. High-permeability grain orientation silicon steel sheets are used as silicon steel sheets. The dry-type voltage transformer improves safety of electricity use and prevents interference from the grid. Thus, the interference between the onboard load grid and onshore grid is effectively prevented while the variable frequency power supply device is protected from damage due to fault of the load equipment.

Taking into account of cost, power supply capacity of docks and space requirement of containers, two embodiments with onshore power supply capacities of 2000kVA and 500kVA are designed.

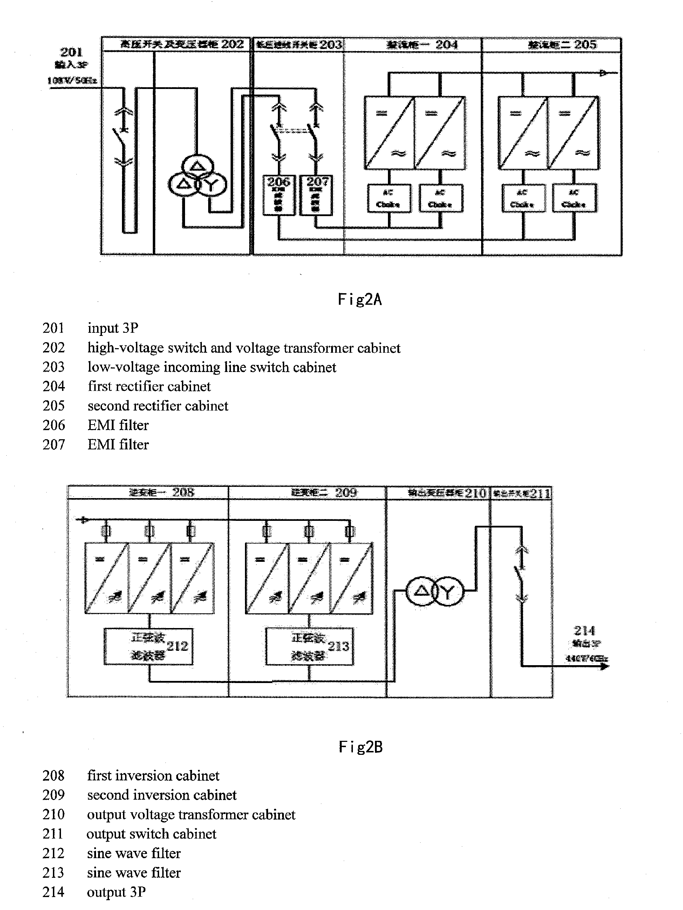

As shown in Figs. 2A and 2B, the drawings are one-line diagrams of the variable frequency power supply device with a capacity of 2000kVA. The variable frequency power supply device comprises a high-voltage switch and voltage transformer cabinet, a low-voltage incoming line switch cabinet, a first rectifier cabinet, a second rectifier cabinet, a first inversion cabinet, a second inversion cabinet, an output voltage transformer cabinet and an output switch cabinet connected in series.

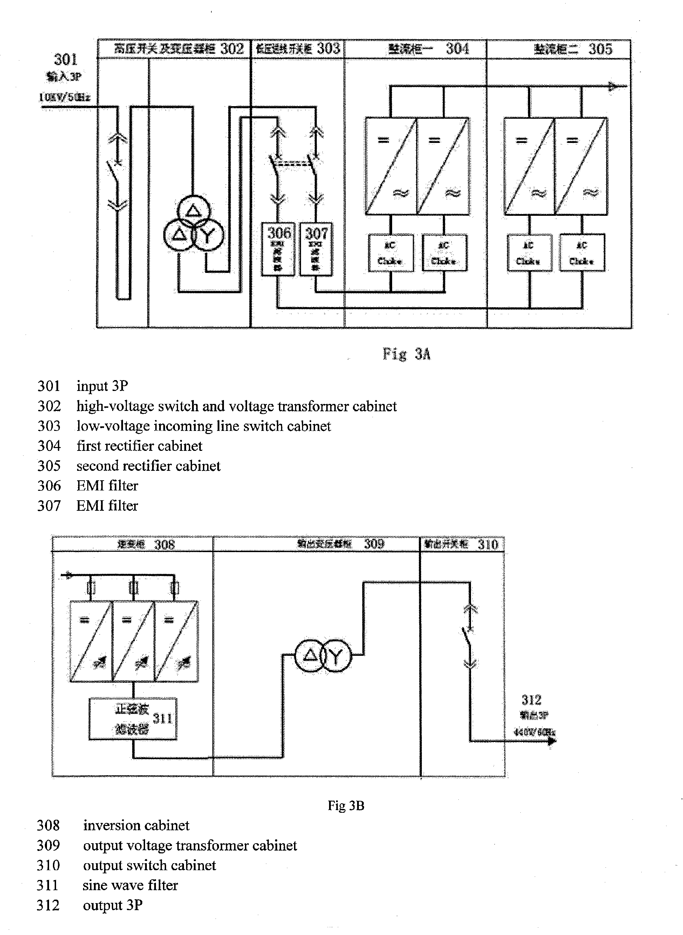

As shown in Figs. 3A and 3B, the drawings are one-line diagrams of the variable frequency power supply device with a capacity of 500kVA. The variable frequency power supply device comprises a high-voltage switch and voltage transformer cabinet, a low-voltage incoming line switch cabinet, a first rectifier cabinet, a second rectifier cabinet, an inversion cabinet, an output voltage transformer cabinet and an output switch cabinet connected in series.

According to various powers and system performances, various elements for voltage reduction, rectifier and inverter are selected. In the embodiment of 2000kVA, 690V level 12-pulse rectifier inverter is used as a frequency converting module, so an output voltage of the high-voltage transformer is 690V, and a rated output voltage of the frequency converting module is 670V. The output voltage transformer functions voltage reduction and isolation, and has an input voltage of 670V and an output voltage of 460V. In the embodiment of 500kVA, 500V level 12-pulse rectifier inverter is used as the frequency converting module, and the transformer is an isolation voltage transformer.

However, the foregoing is illustrative of example embodiments for facilitating those skilled in the art to understand the present invention, and is not to be construed as limiting thereof. Any equivalent modifications or improvements without materially departing from the spirit of the present invention are intended to be included within the scope of the appended claims.

## Claims

1. A movable shore power variable frequency power supply device comprising:
an onshore power supply electric box, an onboard power receiving system,
**characterized in that** the movable shore power variable frequency power supply device further comprises a variable frequency power supply device having input terminals connected to the onshore power supply electric box via cables and output terminals connected to a cable reel box via cables, the variable frequency power supply device performs frequency conversion and voltage transformation of an input power supply and then outputs the converted power to the cable reel box; the cable reel box is provided with at least one low-voltage reel with a plurality of cables and a plurality of plugs, the plurality of cables is connected to the onboard power receiving system via the corresponding plugs.

2. The movable shore power variable frequency power supply device as claimed in claim 1, **characterized in that** the variable frequency power supply device comprises a high-voltage switch and voltage transformer cabinet, a low-voltage incoming line switch cabinet, a first rectifier cabinet, a second rectifier cabinet, an inversion cabinet, an output voltage transformer cabinet and an output switch cabinet connected in series.

3. The movable shore power variable frequency power supply device as claimed in claim 1, **characterized in that** the variable frequency power supply device comprises a high-voltage switch and voltage transformer cabinet, a low-voltage incoming line switch cabinet, a first rectifier cabinet, a second rectifier cabinet, a first inversion cabinet, a second inversion cabinet, an output voltage transformer cabinet and an output switch cabinet connected in series.

4. The movable shore power variable frequency power supply device as claimed in claim 2 or 3, **characterized in that** the numbers of the low-voltage reels and the plugs are nine, respectively.

5. The movable shore power variable frequency power supply device as claimed in claim 4, **characterized in that** the input power of the variable frequency power supply device is 10kV/50HZ.
